# EUROPÄISCHE PATENTSCHRIFT

(11) **EP 2 032 636 B1**
(45) Veröffentlichungstag und Bekanntmachung des Hinweises auf die Patenterteilung: **14.09.2011**
(21) Anmeldenummer: 07764927.5
(22) Anmeldetag: 28.06.2007
(51) Int. Cl.: C08K 3/36, H05F 3/02, D06N 1/00, C08K 3/22

(54) **LEITFÄHIGE BODENLÄGE**
CONDUCTIVE FLOOR COVERING
REVÊTEMENT DE SOL CONDUCTEUR

(30) Priorität: 29.06.2006 DE 102006029963
(43) Veröffentlichungstag der Anmeldung: 11.03.2009
(73) Patentinhaber: Armstrong DLW AG, 74321 Bietigheim-Bissingen (DE)
(72) Erfinder: WEDEL, Boris, 74321 Bietigheim-Bissingen (DE); EISELE, Richard, 74321 Bietigheim-Bissingen (DE); WILLIGEROTH, Sören, 74321 Bietigheim-Bissingen (DE)
(74) Vertreter: Müller-Boré & Partner Patentanwälte
(86) Internationale Anmeldenummer: PCT/EP2007/005749
(87) Internationale Veröffentlichungsnummer: WO 2008/000486

(56) Entgegenhaltungen:
- EP-A2- 1 245 382
- WO-A-92/09992
- US-A- 5 284 705
- US-A- 5 776 373
- DATABASE WPI Week 199806 Derwent Publications Ltd., London, GB; AN 1998-059428 XP002451040 -& JP 09 302268 A (SEKISUI CHEM IND CO LTD) 25. November 1997 (1997-11-25)
- DATABASE WPI Week 200459 Derwent Publications Ltd., London, GB; AN 2004-609618 XP002451074 -& JP 2004 244564 A (KIMOTO KK) 2. September 2004 (2004-09-02)

## Beschreibung

Die vorliegende Erfindung betrifft einen Bodenbelag, umfassend einen elektrisch leitfähig und/oder antistatisch ausgebildeten Träger, wobei der Träger mindestens ein elektrisch leitfähiges Metalloxid und/oder mindestens ein elektrisch leitfähiges organisches Polymer enthält. Des Weiteren betrifft die vorliegende Erfindung einen Bodenbelag, umfassend einen Träger und eine elektrisch leitfähige und/oder antistatische, transparente, strahlen- oder thermisch gehärtete Lackierung auf Acrylpolymer-Basis, ein Verfahren zur werkseitigen Lackierung eines Bodenbelags, umfassend einen Träger, mit einem elektrisch leitfähigen und/oder antistatischen, transparenten, strahlen- oder thermisch härtbaren Lack auf Acrylpolymer-Basis sowie einen derartigen Lack.

Lacke sind z.B. flüssige Substanzen, die in dünner Schicht auf Gegenstände appliziert werden, und durch chemische Reaktion und/oder physikalische Veränderung einen auf den Objekten haftenden festen Film zu bilden, der schützende und/oder dekorative Funktionen aufweisen soll. Die Applikation von Lack auf Werkstücken wird als Lackieren bezeichnet. Die Hauptkomponenten eines Lackes sind Bindemittel, Lösungsmittel, Füllstoffe, Lackhilfsmittel und Pigmente. Lacke auf Acrylpolymer-Basis können hier beispielhaft genannt werden.

Derartige Lacke auf Acrylpolymer-Basis können auf Bodenbeläge aufgebracht und mittels Strahlung oder Wärme gehärtet werden, um die Haltbarkeit solcher Bodenbeläge zu verbessern. Damit die Dessinierung solcher Bodenbeläge optisch nicht beeinträchtigt wird, sollte ein in der Regel über der Dessinierung befindlicher Lacküberzug transparent sein.

Seit einigen Jahren werden Kunststoffbodenbeläge, insbesondere PVC-Bodenbeläge zunehmend mit Lacken auf Acrylpolymer-Basis versiegelt, um die Reinigungs- und Sanierungskosten zu senken. Acrylpolymer-Versiegelungen sind verhältnismäßig widerstandsfähig und bei Vorhandensein von Wachsanteilen können sie sogar polierfähig sein.

Soll der fertige Bodenbelag antistatische und/oder elektrisch leitende Eigenschaften aufweisen bzw. handelt es sich vorzugsweise um einen elektrisch leitfähigen und/oder antistatischen Bodenbelag, ist es zudem notwendig, dass der Lack auf Acrylpolymer-Basis ebenfalls elektrisch leitfähig und/oder antistatisch ist. Verwendet man jedoch herkömmliche Zusätze wie Ruß oder Metallpulver, um einen solchen Lack elektrisch leitfähig und/oder antistatisch zu machen, wird das optische Erscheinungsbild eines derart beschichteten Bodenbelags nachteilhafterweise beeinflusst, da im Wesentlichen keine Transparenz des Lacküberzugs mehr gegeben ist.

Somit liegt der vorliegenden Erfindung die Aufgabe zugrunde, einen Bodenbelag, umfassend einen Träger, bereitzustellen, der elektrisch leitfähig und/oder antistatisch ausgebildet ist, und einen Bodenbelag, umfassend einen Träger und eine strahlenoder thermisch gehärteter Lackierung auf Acrylpolymer-Basis, bereitzustellen, wobei die Lackierung elektrisch leitfähig und/oder antistatisch und im Wesentlichen transparent sein soll.

Diese Aufgabe wird durch die in den Ansprüchen gekennzeichneten Ausführungsformen gelöst.

Insbesondere wird ein Bodenbelag, umfassend einen elektrisch leitfähig und/oder antistatisch ausgebildeten Träger, wobei der Träger mindestens ein elektrisch leitfähiges Metalloxid und/oder mindestens ein elektrisch leitfähiges organisches Polymer enthält, bereitgestellt.

Des weiteren wird ein Bodenbelag, umfassend einen Träger und eine elektrisch leitfähige und/oder antistatische, transparente, strahlen- oder thermisch gehärtete Lakkierung auf Acrylpolymer-Basis, wobei die Lackierung mindestens ein elektrisch leitfähiges Metalloxid und/oder mindestens ein elektrisch leitfähiges organisches Polymer enthält, bereitgestellt.

Die Lackierung kann im Bodenbelag der vorliegenden Erfindung direkt auf den Träger aufgebracht sein, oder es können weitere, dem Fachmann bekannte Materialschichten zwischen dem Träger und der Lackierung vorliegen.

Gemäß der vorliegenden Erfindung kann das elektrisch leitfähige Metalloxid aus der Gruppe, bestehend aus Zinnoxid, Indiumoxid, Antimonoxid, Aluminiumoxid, Titanoxid, Oxiden der seltenen Erden und Gemischen davon, ausgewählt sein. Derartige Metalloxide können auch mit anderen Metallen und/oder Halbmetallen dotiert sein.

Das elektrisch leitfähige Metalloxid kann gemäß der vorliegenden Erfindung auch auf einem oder mehreren Trägermaterialien aufgebracht vorliegen. Geeignete Trägermaterialien umfassen beispielsweise Glimmer, Bariumsulfat, Titanoxid, Siliziumoxid, Aluminiumoxid und Kombinationen davon.

In einer bevorzugten Ausführungsform der vorliegenden Erfindung ist das elektrisch leitfähige Metalloxid antimondotiertes Zinnoxid. In diesem Zusammenhang kann als Beispiel Minatec® 31 CM der Firma Merck genannt werden. Bei Minatec® 31 CM ist Glimmer mit einer Schicht aus antimondotiertem Zinnoxid belegt.

Beim Einsatz von Minatec® 31 CM, d.h. hellen, elektrisch leitfähigen Pigmenten, in nicht elektrisch leitenden Substraten wie Lack kann nur dann eine elektrische Leitfähigkeit erreicht werden, wenn ein Kontakt unter den elektrisch leitfähigen Pigmenten in der nicht elektrisch leitenden Matrix gewährleistet ist. Gemäß der vorliegenden Erfindung umfasst die Matrix die übrigen Bestandteile des Lacks nach Aufbringung und Härtung. Die Zusatzmenge ist von der Pigmentform und der Art der Pigmentverteilung in der Matrix abhängig. Die Konzentration, bei welcher der Widerstand des Anwendungssystems stark abnimmt, wird Perkolations-PVK genannt.

Gemäß der vorliegenden Erfindung können neben oder anstelle des elektrisch leitfähigen Metalloxids auch elektrisch leitfähige organische Polymere in der Lackierung des Bodenbelags eingesetzt werden. Beispiele für solche Polymere sind Polyaniline, Polypyrrole, Polyacetylene, Polythiophene, Derivate der vorhergehenden Polymere und entsprechende Gemische.

Gemäß der vorliegenden Erfindung wird das elektrisch leitfähige Metalloxid bevorzugt in einer Menge von etwa 5 bis etwa 25 Gew.-%, mehr bevorzugt von etwa 10 bis etwa 20 Gew.-%, noch mehr bevorzugt von etwa 10 bis etwa 15 Gew.-% und am meisten bevorzugt von etwa 15 Gew.-%, bezogen auf den Festkörper des Bindemittels im Lack, eingesetzt.

Darüber hinaus weisen die Teilchen des elektrisch leitfähigen Metalloxids bevorzugt eine Größe von kleiner etwa 60 µm, mehr bevorzugt von kleiner etwa 30 µm, noch mehr bevorzugt von kleiner etwa 20 µm und am meisten bevorzugt von kleiner etwa 15 µm auf. Eine untere Grenze kann gemäß der vorliegenden Erfindung beispielsweise mit etwa 10 nm angegeben werden. Ein bevorzugter Bereich für die Größe der Teilchen des elektrisch leitfähigen Metalloxids erstreckt sich von etwa 10 bis etwa 60 µm.

Im erfindungsgemäßen Lack sind die Feststoffe im Bindemittel dispergiert.

Als Bindemittel können im Lack gemäß der vorliegenden Erfindung jegliche Acrylpolymere verwendet werden. Beispiele hierfür sind ungesättigte Urethanacrylatharze, Polyesteracrylate, Polyetheracrylate und Epoxyacrylate, deren Derivate und Gemische.

Des weiteren können im Lack der vorliegenden Erfindung auch Lösungs- bzw. Verdünnungs- bzw. Dispergiermittel enthalten sein, in denen sich das Bindemittel löst bzw. dispergiert, um den Lack in eine besser applizierbare Form zu bringen. Als Lösungs- bzw. Verdünnungs- bzw. Dispergiermittel können Etheralkohole, Aliphaten, Alkohole ("Spiritus", "Sprit"), Aromaten, chlorierte Kohlenwasserstoffe, Ester, Hydroaromaten, Ketone, Terpenkohlenwasserstoffe und Wasser im Lack der vorliegenden Erfindung zum Einsatz kommen. Aromaten, Ester, Ketone, Wasser und deren Gemische sind gemäß der vorliegenden Erfindung als Lösungs-, Verdünnungs- bzw. Dispergiermittel bevorzugt.

Gemäß der vorliegenden Erfindung ist der Lack strahlen- oder thermisch härtbar. Das Aushärten von in flüssigem Zustand aufgetragenen Lacken zu stabilen Oberflächenschichten wird als Lackhärtung bezeichnet. Diese Lackhärtung erfolgt gemäß der vorliegenden Erfindung als Strahlungshärtung beispielsweise durch Ultraviolett (UV)- oder ionisierende Strahlung, als thermische Härtung beispielsweise durch Ofen- oder Infrarottrocknung. Für die UV-Vernetzung, bei der im Rahmen der vorliegenden Erfindung bevorzugt Quecksilberdampf-Lampen als Lichtquellen eingesetzt werden, können vorzugsweise Acrylbestandteile im erfindungsgemäßen Lack ausgehärtet bzw. vernetzt werden. Beispiele hierfür sind ungesättigte Urethanacrylatharze, Polyesteracrylate, Polyetheracrylate und Epoxyacrylate, deren Derivate und Gemische davon. Besonders bevorzugt ist hierbei eine entsprechende Kombination der vorstehend genannten Acrylatharze mit Tripropylenglykoldiacrylat, 1,6-Hexandioldiacrylat und Dipropylendiglycolacrylat. Damit die Aushärtung bzw. Vernetzung des Lacks mit Acrylbestandteilen gemäß der vorliegenden Erfindung erfolgen kann, sollte die dementsprechende Lackzusammensetzung Photoinitiatoren auf der Basis von Benzophenon-Derivaten oder Thioxanthonen bzw. anderen gebräuchlichen Initiatoren umfassen. In diesem Zusammenhang ist Benzophenon besonders bevorzugt. Gemäß der vorliegenden Erfindung ist ein Lack mit folgender Zusammensetzung am meisten bevorzugt: etwa 20 bis etwa 35 Gew.-% Acryloligomere, etwa 35 bis etwa 50 Gew.-% Acrylmonomere, etwa 4 bis etwa 7 Gew.-% Additive, etwa 10 bis 20 Gew.-% Füllstoffe (wobei hier auch die erfindungsgemäßen elektrisch leitfähigen Metalloxide und/oder elektrisch leitfähigen organischen Polymere enthalten sind) und etwa 1 bis etwa 5 Gew.-% Photoinitiatoren.

Darüber hinaus kann der erfindungsgemäße Lack Additive (Zusatzstoffe) wie beispielsweise Entschäumer, Entlüfter, Netz- und Dispergiermittel, Oberflächenadditive, Rheologieadditive, Thixotropierungsmittel, Lichtschutzmittel, Radikalfänger, Katalysatoren bzw. Beschleuniger, Biozide, Mattierungsmittel und Dispergierhilfsmittel bzw. Antiabsetzmittel enthalten.

Als Entschäumer können im Lack der vorliegenden Erfindung beispielsweise aliphatisches Mineralöl, hydrophobierte Kieselsäure, Polyharnstoffverbindungen, Dimethylpolysiloxane, Polysiloxane und speziell modifizierte Siloxane zum Einsatz kommen.

Des weiteren können gemäß der vorliegenden Erfindung Entlüfter wie beispielsweise spezielle organische Polymere, wie Polyether oder Polyacrylate, Dimethylpolysiloxane, Polysiloxane und speziell modifizierte Siloxane und Fluorsilikone in der Lackzusammensetzung enthalten sein.

Im erfindungsgemäßen Lack können darüber hinaus Netz- und Dispergiermittel wie beispielsweise Tenside, Polyphosphate oder Polyacrylate, Oberflächenadditive wie beispielsweise Tenside, fluorierte Verbindungen, Silikonöle, modifizierte Polysiloxane und Acrylat-Copolymere, Rheologieadditive (Verdickungsmittel) wie beispielsweise Cellulosederivate, Derivate von Heteropolysacchariden, Polyacrylate, Polyetherpolyole und Polyurethanderivate, Thixotropierungsmittel wie beispielsweise modifizierte Schichtsilikate, pyrogene Kieselsäuren, Polyharnstoffderivate und Derivate des hydrierten Rizinusöls enthalten sein.

Als Lichtschutzmittel dienen gemäß der vorliegenden Erfindung beispielsweise UV-Absorber wie 2-Hydroxybenzophenone, 2-Hydroxyphenylbenzotriazole, 2-Hydroxyphenyltriazine und Oxalanilide, als Radikalfänger beispielsweise 2,2,6,6-Tetramethylpiperidin und Chelatkomplexe von Übergangsmetallen.

Des weiteren können Katalysatoren bzw. Beschleuniger wie beispielsweise organische Peroxide, z.B. Benzoylperoxide oder 2-Butanonperoxide im Lack der vorliegenden Erfindung enthalten sein.

Als Biozide dienen gemäß der vorliegenden Erfindung beispielsweise N-Heterozyklen, S-Heterozyklen, Isothiazolone, Chloracetamid, Dithiocarbamate, Thiophthalimid-Derivate, Benzimidazol-Derivate und Trialkylzinnverbindungen. Schließlich kann der Lack gemäß der vorliegenden Erfindung auch Mattierungsmittel wie beispielsweise Pigmente, Füllstoffe, Fällungskieselsäuren und PE-Wachse enthalten. Als Füllstoffe dienen dabei beispielsweise Kieselgele, Blancfix (Bariumsulfat), Kieselgur und Talkum, als Pigmente beispielsweise oxidische Pigmente wie beispielsweise Titanoxid, Eisenoxidrot, Eisenoxidschwarz, Chromoxidgrün, oder organische Pigmente wie beispielsweise Azo-, Phthalocyanin- und Triarylmethan-Pigmente.

Im Rahmen der vorliegenden Erfindung zusätzlich eingesetzte Dispergierhilfsmittel bzw. Antiabsetzmittel tragen dazu bei, die im aufzubringenden Lack dispergierten Teilchen davon abzuhalten, sich abzusetzen, was neben einer verbesserten Lagerstabilität zu einer homogenen Verteilung der Teilchen bis hin zum erfindungsgemäßen Bodenbelag mit Lackierung beiträgt. Beispiele solcher Dispergierhilfsmittel bzw. Antiabsetzmittel sind Lösungen von polycarbonsauren Salzen von Polyaminamiden, Lösungen hochmolekularer Blockcopolymere mit pigment-affinen Gruppen, höhermolekulare ungesättigte Polycarbonsäuren, Siloxancopolymere, Derivate davon und entsprechende Gemische.

Bevorzugt beträgt die Dicke der Trockenschicht der Lackierung des erfindungsgemäßen Bodenbelags etwa 5 bis etwa 200 µm, mehr bevorzugt etwa 10 bis etwa 150 µm, noch mehr bevorzugt etwa 15 bis etwa 60 µm und am meisten bevorzugt etwa 15 bis etwa 20 µm. Dabei kann die Trockenschicht der Lackierung des erfindungsgemäßen Bodenbelags als Ein- oder Mehrschichtsystem ausgebildet sein, wobei die einzelnen Schichten wie vorstehend beschrieben aufgebaut sein können.

Der erfindungsgemäße verwendete Bodenbelag als "Träger" für den Lacküberzug unterliegt keiner Einschränkung. Er kann jedes als Stand der Technik bekanntes Material umfassen, und ist zusätzlich antistatisch und/oder elektrisch leitfähig ausgestattet bzw. kann zusätzlich antistatisch und/oder elektrisch leitfähig ausgestattet sein. Als Bodenbelag werden bevorzugt PVC, Linoleum, Gummi-, Polyolefin-, Polyurethanbeläge oder ein Bodenbelag aus nachwachsenden Rohstoffen eingesetzt. Unter dem hier verwendeten Begriff "PVC" versteht man ein durch übliche Polymerisationsverfahren, wie Suspensionspolymerisation (S-PVC), Emulsionspolymerisation (E-PVC) und Substanz- bzw. Massepolymerisation (M-PVC) erhältliches Polyvinylchlorid.

Flexible bzw. elastische Bodenbeläge auf PVC-Basis enthalten Weichmacherhaltiges PVC als Bindemittel und übliche Zusätze wie Füllstoffe, Färbemittel, wie Pigmente und organische und anorganische Farbstoffe, und Hilfsstoffe.

Ferner können die Bodenbeläge übliche Hilfsmittel, wie beispielsweise Antioxidanzien, Antistatika, Stabilisatoren, UV-Absorber, Treibmittel, Haftvermittler, Fungizide, Gleitmittel und Bearbeitungshilfsmittel in den üblichen Mengen enthalten.

Alternativ kann der erfindungsgemäße Bodenbelag auch auf Linoleum-Basis ausgebildet sein. Das Linoleum umfasst dabei übliche Komponenten, wie Bindemittel (sog. Bedford-Zement oder B-Zement aus einem teiloxidierten Leinöl und mindestens einem Harz als Klebrigmacher), mindestens einen Füllstoff und ggf. mindestens ein Färbemittel. Als Füllstoff werden üblicherweise Weichholzmehl und/oder Korkmehl (bei gleichzeitiger Anwesenheit von Holzmehl und Korkmehl typischerweise im Gewichtsverhältnis 90:10) und/oder Kreide, Kaolin (China-Clay), Kieselgur und Schwerspat verwendet. Zusätzlich kann zur Verstrammung der Masse als Füllstoff gefällte Kieselsäure und geringe Mengen Wasserglas, beispielsweise Wasserglas in einer Menge von bis zu 15 Gew.-%, bezogen auf die Menge der Schicht, zugegeben werden.

Des weiteren kann der erfindungsgemäße Bodenbelag auch aus nachwachsenden Rohstoffen wie beispielsweise Epoxidierungsprodukte von Carbonsäureestern gebildet sein. In diesem Zusammenhang sei beispielsweise auf die DE 195 42 274 A1 verwiesen, die Flächengebilde aus nachwachsenden Rohstoffen offenbart.

Der erfindungsgemäße Bodenbelag auf beispielsweise PVC-, Linoleum-Basis oder auf Basis nachwachsender Rohstoffe kann z.B. durch Zusatz mindestens eines Derivats des Imidazols, Imidazolins, Benzimidazols oder Morpholins oder einer kationenaktiven Verbindung wie ein quaternäres Ammoniumsalz, z.B. Tetraalkylammoniumsalz, (vgl. DE 34 16 573 und WO 99/10592) und/oder durch Anordnen einer Schicht auf beispielsweise PVC-, Linoleum-, Gummi-, Polyolefin-, Polyurethanbasis oder auf Basis nachwachsender Rohstoffe, welche mindestens einen elektrisch leitfähigen Füllstoff, beispielsweise Ruß oder Metallpulver, enthält, elektrisch leitfähig ausgebildet sein.

In vorstehendem Zusammenhang kann gemäß der vorliegenden Erfindung im erfindungsgemäßen Bodenbelag auch ein elektrisch leitfähige Metalloxid aus der Gruppe, bestehend aus Zinnoxid, Indiumoxid, Antimonoxid, Aluminiumoxid, Titanoxid, Oxiden der seltenen Erden und Gemischen davon, vorliegen. Derartige Metalloxide können auch mit anderen Metallen und/oder Halbmetallen dotiert sein.

Das elektrisch leitfähige Metalloxid kann gemäß der vorliegenden Erfindung auch auf einem oder mehreren Trägermaterialien aufgebracht vorliegen. Geeignete Trägermaterialien umfassen beispielsweise Glimmer, Bariumsulfat, Titanoxid, Siliziumoxid, Aluminium und Kombinationen davon.

In einer bevorzugten Ausführungsform der vorliegenden Erfindung ist das elektrisch leitfähige Metalloxid antimondotiertes Zinnoxid. In diesem Zusammenhang kann als Beispiel Minatec® 31 CM der Firma Merck genannt werden. Bei Minatec® 31 CM ist Glimmer mit einer Schicht aus antimondotiertem Zinnoxid belegt.

Gemäß der vorliegenden Erfindung können neben oder anstelle des elektrisch leitfähigen Metalloxids auch elektrisch leitfähige organische Polymere im Bodenbelag eingesetzt werden. Beispiele für solche Polymere sind Polyaniline, Polypyrrole, Polyacetylene, Polythiophene, Derivate der vorhergehenden Polymere und entsprechende Gemische.

Die erfindungsgemäßen Bodenbeläge eignen sich für die Verwendung in Krankenhäusern wie beispielsweise in OPs, in der Radiologie, in Laboratorien und Versorgungsräumen. Darüber hinaus können die erfindungsgemäßen Bodenbeläge im industriellen Sektor beispielsweise in Computerräumen, in Reinsträumen und in elektronischen Bereichen eingesetzt werden.

Des weiteren stellt die vorliegenden Erfindung ein Verfahren zur werkseitigen Lackierung eines Bodenbelags, umfassend einen Träger, mit einem vorstehend beschriebenen Lack bereit, umfassend die Schritte des Aufbringens des Lacks auf die Oberseite des Bodenbelags und des Strahlen- oder thermischen Härtens des Lacks.

Das werkseitige Aufbringen des Lacks auf die Oberseite des Bodenbelags kann gemäß der vorliegenden Erfindung durch Anstreichen, durch Aufspritzen mit Hilfe von Spritzgeräten (z.B. Preßluft-, elektrostatisch wirkende, Airless- und Heißspritzpistolen), durch Fluten, Tauchen, Gießen oder Walzen erfolgen. Gemäß dem Verfahren der vorliegenden Erfindung ist das Aufbringen durch Walzen besonders bevorzugt.

Gemäß dem Verfahren der vorliegenden Erfindung erfolgt das werkseitige Härten des Lacks mit Strahlung oder thermisch. Das Härten von in flüssigem Zustand aufgetragenen Lacken zu stabilen Oberflächenschichten wird, wie schon vorstehend beschrieben, als Lackhärtung bezeichnet. Im Verfahren der vorliegenden Erfindung werden dabei im Falle der UV-Härtung bevorzugt Quecksilberdampf-Lampen als Lichtquellen eingesetzt.

Des weiteren stellt die vorliegende Erfindung den vorstehend beschriebenen Lack bereit.

Schließlich stellt die vorliegende Erfindung die Verwendung eines vorstehend beschriebenen Lacks zur werkseitigen Lackierung von Bodenbelägen bereit.

Gemäß der vorliegenden Erfindung wird unter anderem ein Bodenbelag mit einer elektrisch leitfähigen und/oder antistatischen, transparenten, strahlen- oder thermisch gehärteten Lackierung auf Acrylpolymer-Basis bereitgestellt, wobei die Lackierung mindestens ein elektrisch leitfähiges Metalloxid und/oder mindestens ein elektrisch leitfähiges organisches Polymer enthält. Im Gegensatz zu reinen UV-Lacken, die Isolatoren darstellen, ist eine entsprechende Lackschicht auf einem Bodenbelag elektrisch leitfähig und/oder antistatisch. Durch den speziellen Einsatz von beispielsweise Metalloxiden, wie Glimmer, beschichtet mit antimondotiertem Zinnoxid, bleibt im Gegensatz zu den bisher verwendeten, elektrisch leitfähig machenden Additiven, die Lackbeschichtung transparent und damit auch die attraktive Erscheinung eines entsprechenden Bodenbelags erhalten. Gleichzeitig sind die erfindungsgemäß verwendeten Metalloxide nicht wasserlöslich und beeinträchtigen damit nicht die Reinigungsfähigkeit eines entsprechenden Bodenbelags. Ist der so lackierte Bodenbelag selbst elektrisch leitfähig und/oder antistatisch, beeinträchtigt der erfindungsgemäße Lack durch seine eigene elektrische Leitfähigkeit und/oder antistatischen Eigenschaften die entsprechenden Eigenschaften des Bodenbelags nicht.

### Beispiele

In den folgenden Beispielen wurde jeweils ein erfindungsgemäßer Lack der folgenden Zusammensetzung eingesetzt:

| | |
|---|---|
| Acryloligomere | etwa 20 bis etwa 35 Gew.-% |
| Acrylmonomere | etwa 35 bis etwa 50 Gew.-% |
| Additive | etwa 4 bis etwa 7 Gew.-% |
| Füllstoffe (einschließlich der erfindungsgemäßen elektrisch leitfähigen Metalloxide und/oder elektrisch leitfähigen organischen Polymere) | etwa 10 bis 20 Gew.-% |
| Photoinitiatoren | etwa 1 bis etwa 5 Gew.-% |

Des weiteren wurde in den folgenden Beispielen jeweils ein homogener, leitfähiger PVC-Bodenbelag der folgenden Zusammensetzung eingesetzt:

| | |
|---|---|
| PVC | etwa 20 bis etwa 60 Gew.-%, bevorzugt |
| | etwa 45 bis etwa 50 Gew.-% |
| Weichmacher | etwa 10 bis etwa 40 Gew.-%, bevorzugt |
| | etwa 16 bis etwa 20 Gew.-% |
| Füllstoffe (z.B. Kreide, Marmormehl) | etwa 15 bis etwa 60 Gew.-%, bevorzugt |
| | etwa 25 bis etwa 30 Gew.-% |
| Pigmente (schwermetallfrei, einschließ- | etwa 1 bis etwa 15 Gew.-%, bevorzugt |
| lich der in der vorstehenden Beschreibung genannten elektrisch leitfähigen Mittel wie z.B. Ruß) | etwa 1 bis etwa 5 Gew.-% |
| Stabilisatoren (blei- und cadmiumfrei) | etwa 0,5 bis etwa 1,5 Gew.-%, bevorzugt |
| | etwa 0,5 bis etwa 1 Gew.-% |
| Gleitmittel | < etwa 1 Gew.-% |

### Beispiel 1

Ein homogener, leitfähiger PVC-Belag wurde mit einem elektrisch leitfähigen, transparenten, UV-härtbaren Lack auf Polyurethan-Basis lackiert. Anschließend wurde das elektrische Verhalten des so erhaltenen lackierten Bodenbelags ermittelt und mit dem elektrischen Verhalten desselben Bodenbelags ohne erfindungsgemäße Lakkierung verglichen. Die Ergebnisse lassen sich wie folgt zusammenfassen:

| Ableitwiderstand, R₁ bei 23°C/50% r.F. | DIN EN 1081 | | | unlackierte Probe |
|---|---|---|---|---|
| | Meßspannung | V | 100 | 100 |
| | Median | Ohm | 3,0E+05 | 1,1E+05 |
| | Einzelwert | Ohm | 3,0E+05 | 1,1E+05 |
| | | Ohm | 2,9E+05 | 1,4E+05 |
| | | Ohm | 4,3E+05 | 8,2E+04 |
| Ableitwiderstand, IEC 61340-4-1 | | | | |
| Meßspannung 100V bei 23°C/50% r.F. | | | | |
| | Median | Ohm | 6,6E+05 | 2,6E+05 |
| | Einzelwert | Ohm | 6,6E+05 | 1,4E+05 |
| | | Ohm | 6,2E+05 | 2,6E+05 |
| | | Ohm | 8,1E+05 | 3,4E+05 |
| Meßspannung 100V bei 23°C/25% r.F. | | | | |
| | Median | Ohm | 9,1 E+05 | 2,0E+05 |
| | Einzelwert | Ohm | 9,9E+05 | 1,5E+05 |
| | | Ohm | 7,1E+05 | 2,0E+05 |
| | | Ohm | 9,1E+05 | 6,1 E+05 |
| Ableitwiderstand, in Anlehnung an IEC 61340-4-1 Zur Messung des Ableitwiderstands wird ein feuchtes Tuch unter die Probe auf die Metallplatte gelegt | | | | |
| Meßspannung 100V bei 23°C/50% r.F. | | | | |
| | Median | Ohm | 5,8E+05 | 2,0E+05 |
| | Einzelwert | Ohm | 4,9E+05 | 1,1E+05 |
| | | Ohm | 5,8E+05 | 2,0E+05 |
| | | Ohm | 1,0E+06 | 2,0E+05 |
| Meßspannung 100V bei 23°C/25% r.F. | | | | |
| | Median | Ohm | 8,3E+05 | 2,2E+05 |
| | Einzelwert | Ohm | 8,3E+05 | 1,2E+05 |
| | | Ohm | 5,0E+05 | 2,3E+05 |
| | | Ohm | 1,3E+06 | 2,2E+05 |
| Standortübergangswiderstand | VDE 0100 | | | |
| | Medianwert | kOhm | 50 | <43 |
| Begehversuch | DIN EN 1815 | | | |
| isolierende Unterlage | Gummi-Sohle | kV | 0,6 | 0,2 |
| | PVC-Sohle | kV | 0,6 | 0,2 |
| | Neolite-Sohle | kV | 1,3 | 0,2 |
| ableitfähige Unterlage | Gummi-Sohle | kV | 0,6 | 0,1 |
| | PVC-Sohle | kV | 0,4 | 0,1 |
| | Neolite-Sohle | kV | 1,4 | 0,4 |
| Anforderung an den Widerstand der | Gummi-Sohle 10⁸ bis 10⁹ Ohm | | | |
| Prüfsohlen | PVC-Sohle 10¹¹ bis 10¹² Ohm | | | |
| | Neolite-Sohle 10¹⁰ bis 10¹¹ Ohm | | | |

### Beispiel 2

Ein homogener, leitfähiger PVC-Belag wurde mit einem elektrisch leitfähigen, transparenten, UV-härtbaren Lack auf Polyurethan-Basis lackiert. Anschließend wurde das elektrische Verhalten des so erhaltenen lackierten Bodenbelags ermittelt und mit dem elektrischen Verhalten desselben Bodenbelags ohne erfindungsgemäße Lakkierung verglichen. Die Ergebnisse lassen sich wie folgt zusammenfassen:

| Ableitwiderstand, R₁ bei 23°C/50% r.F. | DIN EN 1081 | | | unlackierte Probe |
|---|---|---|---|---|
| | Meßspannung | V | 100/500*) | 100/500*) |
| | Median | Ohm | 5,1E+05 | 3,1 E+05 |
| | Einzelwert | Ohm | 5,1E+05 | 9,5E+05*) |
| | | Ohm | 1,3E+06*) | 2,5E+05 |
| | | Ohm | 6,3E+05 | 3,1E+05 |
| Ableitwiderstand, IEC 61340-4-1 | | | | |
| Meßspannung 100V bei 23°C/50% r.F. | | | | |
| | Median | Ohm | 3,8E+06 | 3,2E+06 |
| | Einzelwert | Ohm | 3,0E+06 | 4,0E+06 |
| | | | | |
| | | Ohm | 5,0E+06 | 2,2E+06 |
| | | Ohm | 3,8E+06 | 3,2E+06 |
| Meßspannung 100V bei 23°C/25% r.F. | | | | |
| | Median | Ohm | 4,0E+06 | 3,4E+06 |
| | Einzelwert | Ohm | 4,0E+06 | 3,8E+06 |
| | | Ohm | 4,5E+06 | 2,3E+06 |
| | | Ohm | 1,6E+06 | 3,4E+06 |
| Ableitwiderstand, in Anlehnung an IEC 61340-4-1 Zur Messung des Ableitwiderstands wird ein feuchtes Tuch unter die Probe auf die Metallplatte gelegt | | | | |
| Meßspannung 100V bei 23°C/50% r.F. | | | | |
| | Median | Ohm | 3,0E+06 | 2,0E+06 |
| | Einzelwert | Ohm | 3,0E+06 | 2,7E+06 |
| | | Ohm | 3,3E+06 | 2,0E+06 |
| | | Ohm | 2,3E+06 | 1,2E+06 |
| Meßspannung 100V bei 23°C/25% r.F. | | | | |
| | Median | Ohm | 4,2E+06 | 2,2E+06 |
| | Einzelwert | Ohm | 4,2E+06 | 1,8E+06 |
| | | Ohm | 4,4E+06 | 2,2E+06 |
| | | Ohm | 2,7E+06 | 2,4E+06 |
| Standortübergangswiderstand | VDE 0100 | | | |
| | Medianwert | kOhm | 120 | 55 |
| Begehversuch | DIN EN 1815 | | | |
| isolierende Unterlage | Gummi-Sohle | kV | 0,5 | 0,4 |
| | PVC-Sohle | kV | 0,5 | 0,4 |
| | Neolite-Sohle | kV | 1,1 | 0,2 |
| ableitfähige Unterlage | Gummi-Sohle | kV | 0,6 | 0,3 |
| | PVC-Sohle | kV | 0,4 | 0,2 |
| | Neolite-Sohle | kV | 1,1 | 0,2 |
| Anforderung an den Widerstand der | Gummi-Sohle 10⁸ bis 10⁹ Ohm | | | |
| Prüfsohlen | PVC-Sohle 10¹¹ bis 10¹² Ohm | | | |
| | Neolite-Sohle 10¹⁰ bis 10¹¹ Ohm | | | |

Anhand der vorstehend aufgeführten Messergebnisse wird deutlich, dass sich der entsprechend ermittelte Widerstand im Vergleich von unlackiertem und lackierten Bodenbelag nur geringfügig erhöht, und somit die elektrische Leitfähigkeit eines mit einem Lack gemäß der vorliegenden. Erfindung lackierten Bodenbelags erhalten bleibt. Die in den Beispielen 1 und 2 aufgeführten erfindungsgemäßen Bodenbeläge zeigten im Wesentlichen die gleichen Materialeigenschaften wie unlackierte Bodenbeläge und erfüllten insbesondere die Anforderungen nach DIN EN 649 und eignen sich beispielsweise nach DIN EN 685 zur Verwendung in Krankenhäusern wie beispielsweise in OPs, in der Radiologie, in Laboratorien und Versorgungsräumen. Des weiteren können die erfindungsgemäßen Bodenbeläge im industriellen Sektor beispielsweise in Computerräumen, in Reinsträumen und in elektronischen Bereichen eingesetzt werden.

## Patentansprüche

1. Bodenbelag, umfassend einen elektrisch leitfähig und/oder antistatisch ausgebildeten Träger, wobei der Träger mindestens ein elektrisch leitfähiges Metalloxid und/oder mindestens ein elektrisch leitfähiges organisches Polymer enthält.

2. Bodenbelag nach Anspruch 1, weiter umfassend eine elektrisch leitfähige und/oder antistatische, transparente, strahlen- oder thermisch gehärtete Lakkierung auf Acrylpolymer-Basis, wobei die Lackierung mindestens ein elektrisch leitfähiges Metalloxid und/oder mindestens ein elektrisch leitfähiges organisches Polymer enthält.

3. Bodenbelag nach Anspruch 1 oder 2, wobei das elektrisch leitfähige Metalloxid aus der Gruppe, bestehend aus Zinnoxid, Indiumoxid, Antimonoxid, Aluminiumoxid, Titanoxid, Oxiden der seltenen Erden und Gemischen davon, ausgewählt ist.

4. Bodenbelag nach einem der Ansprüche 1 bis 3, wobei das elektrisch leitfähige Metalloxid antimondotiertes Zinnoxid ist.

5. Bodenbelag nach einem der Ansprüche 1 bis 4, wobei das elektrisch leitfähige Metalloxid Glimmer mit einer Schicht aus antimondotiertem Zinnoxid ist.

6. Bodenbelag nach einem der Ansprüche 2 bis 5, wobei das elektrisch leitfähige Metalloxid in einem Anteil von 5 bis 25 Gew.-%, bezogen auf den Festkörper des Bindemittels im Lack, vorliegt.

7. Bodenbelag nach einem der Ansprüche 1 bis 6, wobei die Teilchen des elektrisch leitfähigen Metalloxids eine Größe von kleiner 60 µm aufweisen.

8. Bodenbelag nach einem der Ansprüche 2 bis 7, wobei die Dicke der Lackierung 5 bis 200 µm beträgt.

9. Bodenbelag nach einem der Ansprüche 1 bis 8, wobei der Träger PVC, Linoleum, Gummi, Polyolefin, Polyurethan oder nachwachsende Rohstoffe umfasst.

10. Bodenbelag nach Anspruch 9, wobei der Träger etwa 20 bis etwa 60 Gew.-% PVC, etwa 10 bis etwa 40 Gew.-% Weichmacher, etwa 15 bis etwa 60 Gew.-% Füllstoffe, etwa 1 bis etwa 15 Gew.-% Pigmente, etwa 0,5 bis etwa 1,5 Gew.-% Stabilisatoren und < etwa 1 Gew.-% Gleitmittel umfasst.

11. Verfahren zur werkseitigen Lackierung eines Bodenbelags, umfassend einen Träger, mit einem elektrisch leitfähigen und/oder antistatischen, transparenten, strahlen- oder thermisch härtbaren Lack auf Acrylpolymer-Basis nach einem der Ansprüche 2 bis 12, umfassend die Schritte des Aufbringens des Lacks auf die Oberseite des Bodenbelags und des thermischen Härtens des Lacks oder des Härtens des Lacks mit Strahlung.

12. Verfahren nach Anspruch 11, wobei das Aufbringen des Lacks durch Walzen erfolgt.

## Claims

1. Floor covering comprising an electrically conductive and/or anti-statically constructed substrate, wherein the substrate contains at least one electrically conductive metal oxide and/or at least one electrically conductive organic polymer.

2. Floor covering as claimed in claim 1, further comprising an electrically conductive and/or antistatic, transparent, radiation-hardened or thermally hardened, acrylic polymer-based lacquering, wherein the lacquering contains at least one electrically conductive metal oxide and/or at least one electrically conductive organic polymer.

3. Floor covering as claimed in claim 1 or 2, wherein the electrically conductive metal oxide is selected from the group consisting of tin oxide, indium oxide, antimony oxide, aluminium oxide, titanium oxide, oxides of the rare earths and mixtures thereof.

4. Floor covering as claimed in any one of claims 1 to 3, wherein the electrically conductive metal oxide is antimony-doped tin oxide.

5. Floor covering as claimed in any one of claims 1 to 4, wherein the electrically conductive metal oxide is mica having a layer of antimony-doped tin oxide.

6. Floor covering as claimed in any one of claims 2 to 5, wherein the electrically conductive metal oxide is present in a proportion of 5 to 25 wt.%, based on the solid body of the binding agent in the lacquer.

7. Floor covering as claimed in any one of claims 1 to 6, wherein the particles of the electrically conductive metal oxide have a size of less than 60 µm.

8. Floor covering as claimed in any one of claims 2 to 7, wherein the thickness of the lacquering is 5 to 200 µm.

9. Floor covering as claimed in any one of claims 1 to 8, wherein the substrate comprises PVC, linoleum, rubber, polyolefin, polyurethane or renewable raw materials.

10. Floor covering as claimed in claim 9, wherein the substrate comprises about 20 to about 60 wt.% PVC, about 10 to about 40 wt.% plasticiser, about 15 to about 60 wt.% fillers, about 1 to about 15 wt.% pigments, about 0.5 to about 1.5 wt.% stabilisers and < about 1 wt.% lubricants.

11. Method of lacquering a floor covering at the factory, comprising a substrate, with an electrically conductive and/or antistatic, transparent, radiation-hardenable or thermally hardenable, acrylic polymer-based lacquer as claimed in any one of claims 2 to 10, comprising the steps of:
applying the lacquer to the topside of the floor covering and
thermally hardening the lacquer or hardening the lacquer with radiation.

12. Method as claimed in claim 11, wherein the lacquer is applied by rolling.

## Revendications

1. Revêtement de sol comprenant un support électriquement conducteur et/ou antistatique, le support contenant au moins un oxyde métallique électriquement conducteur et/ou au moins un polymère organique électriquement conducteur.

2. Revêtement de sol selon la revendication 1, comprenant en outre un laquage à base de polymère acrylique durci par rayonnement ou thermiquement, transparent, électriquement conducteur et/ou antistatique, le laquage comprenant au moins un oxyde métallique électriquement conducteur et/ou au moins un polymère organique électriquement conducteur.

3. Revêtement de sol selon la revendication 1 ou 2, où l'oxyde métallique électriquement conducteur est sélectionné dans un groupe comprenant l'oxyde de zinc, l'oxyde d'indium, l'oxyde d'antimoine, l'oxyde d'aluminium, l'oxyde de titane, les oxydes de terres rares et des mélanges de ceux-ci.

4. Revêtement de sol selon une des revendications 1 à 3, où l'oxyde métallique électriquement conducteur est l'oxyde de zinc dopé à l'antimoine.

5. Revêtement de sol selon une des revendications 1 à 4, où l'oxyde métallique électriquement conducteur est du mica avec une couche d'oxyde de zinc dopé à l'antimoine.

6. Revêtement de sol selon une des revendications 2 à 5, où l'oxyde métallique électriquement conducteur constitue une proportion de 5 à 25 en poids pour cent par rapport aux matières non volatiles du liant du laquage.

7. Revêtement de sol selon une des revendications 1 à 6, où les particules de l'oxyde métallique électriquement conducteur présentent une dimension inférieure à 60 µm.

8. Revêtement de sol selon une des revendications 2 à 7, où l'épaisseur du laquage est comprise entre 5 et 200 µm.

9. Revêtement de sol selon une des revendications 1 à 8, où le support contient du PVC, du linoléum, du caoutchouc, de la polyoléfine, du polyuréthane ou des matières premières renouvelables.

10. Revêtement de sol selon la revendication 9, où le support comprend un pourcentage en poids de quelque 20 à 60 % de PVC, quelque 10 à 40 % de plastifiant, quelque 15 à 60 % de matières de remplissage, quelque 1 à 5 % de pigments, environ 0,5 à 1,5 % de stabilisateurs et moins de 1 % de lubrifiant.

11. Procédé de laquage en usine d'un revêtement de sol comprenant un support avec un laquage à base de polymère acrylique durci par rayonnement ou thermiquement, transparent, électriquement conducteur et/ou antistatique selon une des revendications 2 à 12, comprenant les étapes de l'application du laquage sur la face supérieure du revêtement de sol et du durcissement thermique ou par rayonnement du laquage.

12. Procédé selon la revendication 11, où l'application du laquage intervient par laminage.
